## Europäisches Patentamt

## European Patent Office

## Office européen des brevets

(11) Veröffentlichungsnummer: **0 201 863**
**B1**

(12) # EUROPÄISCHE PATENTSCHRIFT

(45) Veröffentlichungstag der Patentschrift:
05.07.89

(51) Int. Cl.⁴: **F 02 M 37/00, F 01 N 5/00**

(21) Anmeldenummer: **86106254.5**

(22) Anmeldetag: **07.05.86**

(54) **Brennstoffversorgungseinrichtung für Motoren, insbesondere von Modellflugzeugen.**

(30) Priorität: **11.05.85 DE 3517120**

(43) Veröffentlichungstag der Anmeldung:
**20.11.86 Patentblatt 86/47**

(45) Bekanntmachung des Hinweises auf die Patenterteilung:
**05.07.89 Patentblatt 89/27**

(84) Benannte Vertragsstaaten:
**AT BE CH DE FR GB IT LI LU NL SE**

(56) Entgegenhaltungen:
**CH-A- 100 070**
**DE-A- 2 235 913**
**FR-A- 495 587**
**GB-A- 832 936**
**US-A- 2 059 325**
**US-A- 2 372 700**

(73) Patentinhaber: **Krumscheid, Günter, Halinger Dorfstrasse 83, D-5750 Menden 1 (DE)**

(72) Erfinder: **Krumscheid, Günter, Halinger Dorfstrasse 83, D-5750 Menden 1 (DE)**

(74) Vertreter: **Patentanwaltsbüro Cohausz & Florack, Schumannstrasse 97, D-4000 Düsseldorf 1 (DE)**

ACTORUM AG

## Beschreibung

Die Erfindung bezieht sich auf eine Brennstoffversorgungseinrichtung für Motoren von Fahrzeugen, insbesondere von Modellflugzeugen, bestehend aus einem gegenüber der Atmosphäre verschlossenen Brennstofftank, der über eine Brennstoffauslaß-Leitung mit dem Motor des Fahrzeuges und über eine Gasleitung mit einer Überdruckkammer in einem als Schalldämpfer ausgebildeten Auspuff verbunden ist, wobei die Überdruckkammer einlaßseitig mit dem Verbrennungsgas-Auslaß des Motors verbunden und auslaßseitig eine den Druck in der Überdruckkammer steuernde Ventilanordnung und einen in die Atmosphäre führenden Auspuffgas-Auslaß aufweist.

Bei einer Brennstoffversorgungseinrichtung der eingangs genannten Art (US-PS 2 372 700) sind zwei Ventile als Zwillingsventil derart ausgebildet, daß sie in Abhängigkeit vom Leerlauf- oder Lastbetrieb des Motors verschiedene Stellungen einnehmen, so daß der aus der Überdruckkammer dem Tank zugeführte Druck bei beiden Betriebszuständen gleich ist. Eine weitere Abhängigkeit von anderen Betriebszuständen des Motors oder Lagen des Fahrzeuges ist nicht vorgesehen.

Bei manchen Fahrzeugen, zum Beispiel bei Modellflugzeugen, bei denen der Druck der Auspuffgase zur Förderung von Brennstoff zum Motor verwendet wird (DE-Z «Modell» 2/85, Seite 93), aber nicht nur bei Modellflugzeugen, können andere Betriebszustände und/oder Lagen des Fahrzeuges die Brennstoffversorgung stören.

Während unter normalen Flugbedingungen (Horizontalflug und sanfter Steigflug) der in der Überdruckkammer herrschende Druck ausreicht, den vom Motor benötigten Brennstoff aus dem Tank in die Brennstoff-Auslaßleitung zu drücken, reicht dieser Druck bei starkem Steigflug dafür nicht mehr aus. Entsprechende Verhältnisse können sich je nach Lage des Tanks und des Einlasses der Brennstoff-Auslaßleitung bei einer starken Beschleunigung des Modellflugzeuges oder eines anderen, motorgetriebenen Fahrzeuges ergeben. Wenn der im Tank erzeugte Druck für die Brennstoffversorgung nicht mehr ausreicht, kommt es zum Aussetzen des Motors. Darüber hinaus haben Untersuchungen gezeigt, daß der Motor ungleichmäßig läuft, wenn er die Möglichkeit hat, aus dem Auspuff Rückluft zu holen.

Bei einer anderen bekannten Brennstoffversorgung (US-PS 2 059 325) für ein Kraftfahrzeug wird der Druck der Auspuffgase zum Betrieb einer Brennstoffpumpe verwendet. An der die Auspuffgase zu der Brennstoffpumpe führenden Zufuhrleitung ist ein Druckentlastungsventil angeschlossen, das von einer Feder in Schließstellung vorbelastet ist.

Dieser Feder wirkt ein derart in einem Schwenklager gelagertes Gewicht entgegen, das bei Bergfahrt des Fahrzeuges, wenn der Motor mehr Brennstoff verlangt, das Druckentlastungsventil bei einem höheren Druck als bei Talfahrt, wenn der Motor weniger Brennstoff verlangt, öffnet. Die Ansprechempfindlichkeit eines solchen Druckentlastungsventil hängt darüber hinaus von der seitlichen Schräglage ab. Bei einer Bergfahrt in seitlicher Schräglage wird deshalb weniger Brennstoff gefördert als benötigt wird. Auch bei Kurvenfahrten in ausgebauten Kurven beeinflußt die Fliehkraft die Lage des Gewichtes. Diese Einflußgrößen stören die ordnungsgemäße Brennstoffversorgung.

Der Erfindung liegt die Aufgabe zugrunde, die bekannte Brennstoffversorgungsvorrichtung derart zu verbessern, daß der Motor auch bei starker Steillage, zum Beispiel bei einem Modellflugzeug bei starkem Steigflug, und/oder starker Beschleunigung mit ausreichendem Brennstoff versorgt wird.

Diese Aufgabe wird erfindungsgemäß bei einer Brennstoffversorgungseinrichtung der eingangs genannten Art dadurch gelöst, daß die Ventilanordnung aus mindestens einem Ventil besteht, dessen Ventilkörper in einer in Längsrichtung des Fahrzeuges verlaufenden Führung beweglich gelagert ist, so daß das Ventil in Abhängigkeit von der Schräglage des Fahrzeuges und/oder den beim Beschleunigen und Verzögern des Fahrzeuges wirksamen Trägheitskräften den Auspuffgas-Auslaß drosselt.

Bei der erfindungsgemäßen Brennstoffversorgungseinrichtung wird ohne aufwendige Steuerung und Regelung auf denkbar einfache, rein mechanische Art und Weise der bei der jeweiligen Fahrzeuglage bzw. Beschleunigung oder Verzögerung für eine einwandfreie Brennstoffversorgung unterschiedlich hohe Überdruck allein durch die von der Schräglage und/oder den Trägheitskräften abhängige mehr oder weniger starke Drosselung der Ventilanordnung gewährleistet. Eine seitliche Schräglage des Fahrzeuges (Drehung um die eigene Längsachse) hat dagegen keinen Einfluß auf dei Brennstoffversorgung.

Die Ventilanordnung besteht vorzugsweise aus mehreren gleichartigen Ventilen. Über das Gewicht der Ventilkörper kann die Kraft bestimmt werden, mit der die Drosselung des Ventils erfolgen soll. Dies kann beispielsweise in der Form geschehen, daß in jeder Führung neben dem Ventilkörper mindestens ein weiterer beweglicher Ventilkörper gehalten ist. In der Konstruktion einfach ist eine Führung, die aus einem längsgeschlitzten Rohr besteht.

Es hat sich insbesondere bei mehreren Ventilen als zweckmäßig erwiesen, wenn die Führung des Ventilkörpers in einer weiteren Kammer im Auspuff angeordnet ist, von der der in die Atmosphäre führende Auspuffgas-Auslaß ausgeht.

Bei einer bereits in der Praxis bewährten Brennstoffversorgungseinrichtung besteht der Auspuff aus drei axial hintereinander angeordneten Kammern, von denen die beiden äußeren Kammern über eine geschlossen durch die mittlere Kammer führende Rohrleitung miteinander verbunden sind und die in Strömungsrichtung der Auspuffgase zweite Kammer mit der mittleren Kammer über die Ventilanordnung verbunden ist.

Da der Brennstoff in der Regel Öl enthält, das bei kaltem Auspuff die Beweglichkeit der Ventilkörper behindern und damit die Funktion der Ventilanordnung beeinträchtigen könnte, ist nach einer weiteren Ausgestaltung vorgesehen, daß die Kammern zusätzlich über eine in die Atmosphäre führende Leitung miteinander verbunden sind, wobei die Leitung an der tiefsten Stelle der Kammern angeordnete Einlässe aufweist, deren freier Querschnitt wesentlich (ein Bruchteil) kleiner als der freie Querschnitt der übrigen Verbindungen der Kammern ist.

Im fogenden wird die Erfindung anhand einer ein Ausführungsbeispiel darstellenden Zeichnung näher erläutert. Im einzelnen zeigen:

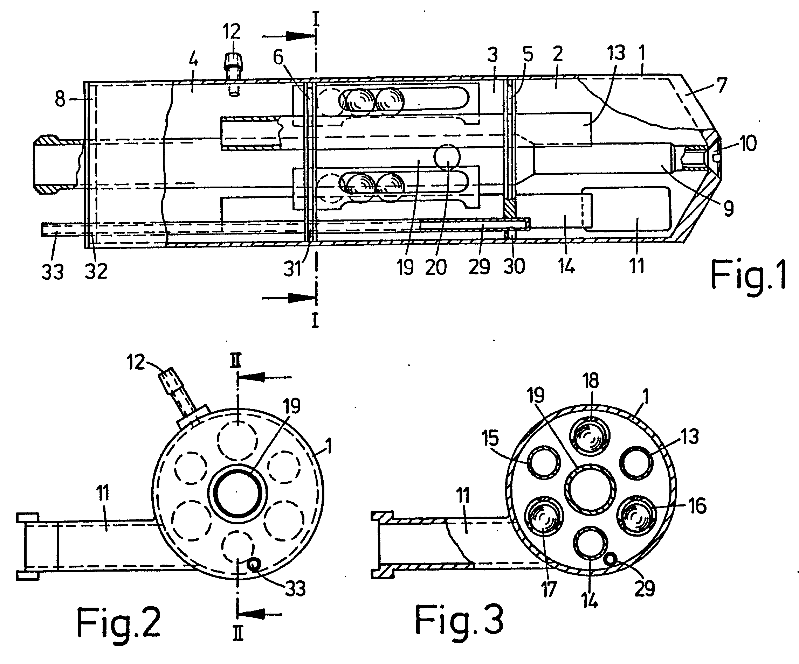

Fig. 1 einen Auspuff in Seitenansicht, teilweise bei weggebrochenem Gehäuse,

Fig. 2 den Auspuff gem. Fig. 1 in Stirnansicht von der Seite des Auspuffgas-Auslasses,

Fig. 3 den Auspuff gem. Fig. 1 im Querschnitt nach der Linie I - I der Fig. 1,

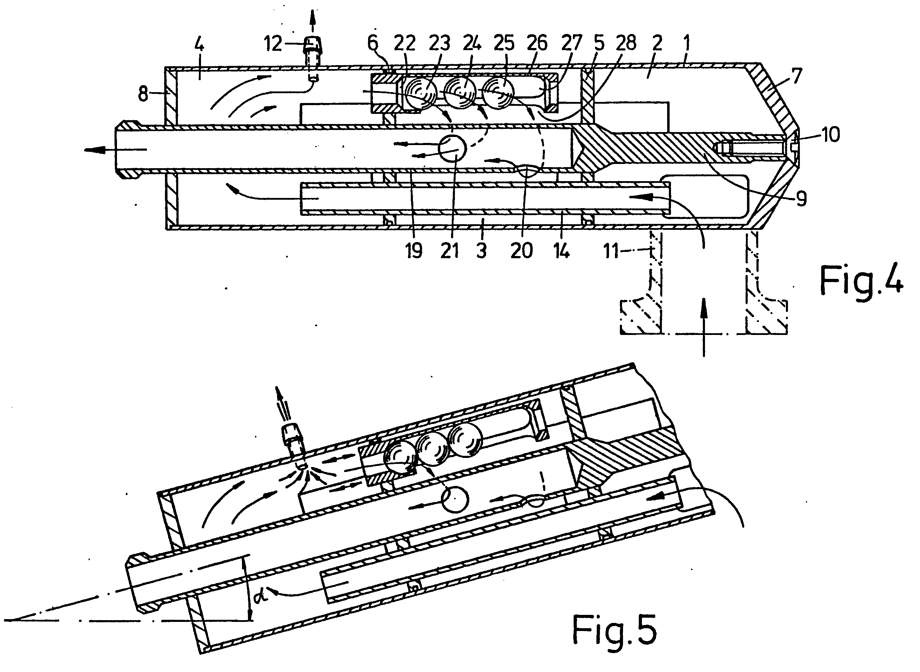

Fig. 4 den Auspuff gem. Fig. 1 im Axialschnitt nach der Linie II - II der Fig. 2 und

Fig. 5 einen Teil des Auspuffes gem. Fig. 1 beim Steigflug im Axialschnitt nach der Linie II - II der Fig. 2.

Der Auspuff besteht aus einem kreiszylindrischen Gehäuse 1 und einem das Gehäuse 1 in drei Kammern 2, 3, 4 mit Wänden 5, 6 unterteilenden Einsatz. Das Gehäuse 1 ist auf der einen Seite durch einen angeformten Deckel 7 und auf der anderen Seite durch einen Deckel 8 des Einsatzes verschlossen. Der Einsatz wird im Gehäuse 1 mittels eines an einem zentralen Zapfen 9 des Einsatzes befestigten Schraubenbolzens 10 am Gehäusedeckel 7 gehalten.

Die Kammer 2 ist mittels eines als angeformter Stutzen am Gehäuse 1 ausgebildeten Verbrennungsgas-Einlasses 11 mit dem nicht dargestellten Motor verbunden. Von der Kammer 4 geht ein Verbrennungsgas-Auslaß 12 in Form eines Schlauchanschlusses aus, auf den eine nicht dargestellte und zum Tank führende Leitung aufsteckbar ist, so daß der in der Kammer 4 herrschende Druck in den Tank übertragen wird.

Die Kammern 2 und 4 sind über drei symmetrisch um die Zylinderachse verteilt angeordnete und in den Trennwänden 5, 6 gehaltene Rohrleitungen 13, 14, 15 miteinander verbunden. Die Verbrennungsgase, die über den Stutzen 11 in die Kammer 2 gelangen, können also über die Rohrleitungen 13 bis 15 in die Kammer 4 weiterströmen. Die Kammer 4 ist über drei gleichartige Ventile 16, 17, 18 mit der mittleren Kammer 3 verbunden. Von der mittleren Kammer 3 geht eine zentrale Rohrleitung 19 mit am Umfang verteilten Einlaßöffnungen 20, 21 aus, die geschlossen durch die letzte Kammer 4 in die Atmosphäre führt und den Auspuff-Auslaß bildet.

Die drei gleichartigen Ventile 16, 17, 18 sind nach Art von Rückschlagventilen ausgebildet. Sie bestehen jeweils aus einem Ventilsitz 22 und einem als Kugel ausgebildeten Ventilkörper 23, der zusammen mit weiteren Kugeln 24, 25 in einer Führung 26 lose gelagert ist. Die Führung 26 wird von einem Rohr gebildet, das mehrere Längsschlitze 28 aufweist.

Am Boden des Gehäuses 7 ist eine in den Trennwänden 5, 6 und dem Deckel 8 gehaltene Leitung 29 angeordnet, die im Bereich der Trennwände 5, 6 und des Deckels 8 zu den einzelnen Kammern 2, 3, 4 hin offene Einlässe 30, 31, 32 aufweist und mit ihrem Auslaß 33 in die Atmosphäre führt.

Die Funktion der erfindungsgemäßen Brennstoffversorgung ist folgende:

Die vom Motor erzeugten Verbrennungsgase gelangen über den Verbrennungsgas-Auslaß 11 in die Kammer 2, von der sie über die Leitungen 13 bis 15 in die Kammer 4 gelangen. In dieser Kammer 4 baut sich ein gewisser Überdruck auf. Dieser Druck wird über den Verbrennungsgas-Auslaß 12 in den Tank übertragen, so daß der Brennstoff aus dem Tank mit Druck dem Motor zugeführt wird. Wie groß der Druck ist, hängt von der durch die Lage des Flugzeuges bestimmten Lage des Auspuffes ab. Solange das Flugzeug sich im Horizontalflug befindet, kann der Druck ohne größeren Widerstand über die Ventile 16 bis 18 in die mittlere Kammer 3 und von der mittleren Kammer 3 über die Leitung 19 in die Atmosphäre strömen. Es kann u.U. erforderlich sein, die Ventilkörper 23 mittels einer Feder vorzubelasten, damit sich in der Kammer 4 auch beim Horizontalflug ein ausreichender Überdruck bildet. Es ist aber auch möglich, durch eine natürliche, konstante Drosselung der einzelnen Auslässe für einen solchen Überdruck zu sorgen.

Sobald sich das Flugzeug in den Steigflug begibt, setzt sich der Ventilkörper 23 auf den zugehörigen Ventilsitz 22 und verschließt das Ventil mit einer von der Schräglage des Auspuffes abhängigen Kraft. Durch die zusätzlichen, beweglichen Körper 24, 25 wird diese Kraft verstärkt. In der Kammer 3 baut sich ein dieser Kraft entsprechender Überdruck auf, so daß im Tank ein größerer Überdruck als beim Horizontalflug entsteht. Dieser größere Überdruck sorgt dafür, daß auch beim Steigflug der Motor mit einer ausreichenden Brennstoffmenge versorgt wird.

Aufgrund der in Bewegungsrichtung des Modellflugzeuges möglichen Beweglichkeit der Ventilkörper 23 wirkt auf die Ventilkörper 23 auch ein Trägheitsmoment bei der positiven und negativen Beschleunigung ein. Die Ventilanordnung ist deshalb so angeordnet, daß bei einer positiven Beschleunigung der Ventilkörper 23 mehr oder weniger stark drosselt, so daß auch in dieser für die Brennstoffversorgung kritischen Phase ein ausreichender Überdruck zur Verfügung steht, um den Motor mit ausreichend Brennstoff zu versorgen.

Es hat sich gezeigt, daß die als Rückschlagventile 16, 17, 18 wirkenden Ventile verhindern, daß der Motor Rückluft holt. Dadurch wird ein ruhigerer Motorlauf erreicht.

Öl in den Auspuffgasen, das sich an den Wänden des Gehäuses niederschlägt und in dem unteren Bereich des Gehäuses sich sammelt, wird über die Leitung 29 mit dem in den einzelnen Kammern 2, 3, 4 herrschenden Druck ausgefördert. Es wird auf diese Art und Weise verhindert, daß sich zu viel Öl in dem Gehäuse 1 sammelt und im kalten Zustand die Beweglichkeit der Ventilkörper 23 und damit ihre Funktion der selbständigen Druckregelung beeinträchtigt.

## Patentansprüche

1. Brennstoffversorgungseinrichtung für Motoren von Fahrzeugen, insbesondere von Modellflugzeugen, bestehend aus einem gegenüber der Atmosphäre verschlossenen Brennstofftank, der über eine Brennstoffauslaß-Leitung mit dem Motor des Fahrzeuges und über eine Gasleitung mit einer Überdruckkammer (4) in einem als Schalldämpfer ausgebildeten Auspuff verbunden ist, wobei die Überdruckkammer (4) einlaßseitig mit dem Verbrennungsgas-Auslaß des Motors verbunden und auslaßseitig eine den Druck in der Überdruckkammer (4) steuernde Ventilanordnung (16, 17, 18) und einen in die Atmosphäre führenden Auspuffgas-Auslaß (19) aufweist, dadurch gekennzeichnet, daß die Ventilanordnung (16, 17, 18) aus mindestens einem Ventil (22, 23) besteht, dessen Ventilkörper (23) in einer in Längsrichtung des Fahrzeuges verlaufenden Führung (26) beweglich gelagert ist, so daß das Ventil (22, 23) in Abhängigkeit von der Schräglage des Fahrzeuges und/oder den beim Beschleunigen und Verzögern des Fahrzeuges wirksamen Trägheitskräften den Auspuffgas-Auslaß (19) drosselt.

2. Brennstoffversorgungsvorrichtung nach Anspruch 2, dadurch gekennzeichnet, daß die Ventilanordnung aus mehreren gleichartigen Ventilen (16, 17, 18) besteht.

3. Brennstoffversorgungsvorrichtung nach Anspruch 1 oder 2, dadurch gekennzeichnet, daß in der Führung (26) des Ventilkörpers (23) neben dem Ventilkörper (23) mindestens ein weiterer, beweglicher Körper (24, 25) gehalten ist.

4. Brennstoffversorgungsvorrichtung nach einem der Ansprüche 1 bis 3, dadurch gekennzeichnet, daß die Führung (26) aus einem längsgeschlitzten Rohr besteht.

5. Brennstoffversorgungsvorrichtung nach einem der Ansprüche 1 bis 4, dadurch gekennzeichnet, daß die Führung (26) des Ventilkörpers (23) in einer weiteren Kammer (3) im Auspuff angeordnet ist, von der der in die Atmosphäre führende Auspuffgas-Auslaß (19) ausgeht.

6. Brennstoffversorgungsvorrichtung nach einem der Ansprüche 1 bis 5, dadurch gekennzeichnet, daß der Auspuff drei axial hintereinander angeordnete Kammern (2, 3, 4) aufweist, von denen die beiden äußeren Kammern (2, 4) über mindestens eine geschlossen durch die mittlere Kammer (3) führende Rohrleitung (13, 14, 15) miteinander verbunden sind und die in Strömungsrichtung der Auspuffgase zweite Kammer (4) mit der mittleren Kammer (3) über die Ventilanordnung (16, 17, 18) verbunden ist.

7. Brennstoffversorgungsvorrichtung nach einem der Ansprüche 1 bis 6, dadurch gekennzeichnet, daß die Kammern (2, 3, 4) zusätzlich über eine in die Atmosphäre führende Leitung (29) miteinander verbunden sind, wobei die Leitung (29) an der tiefsten Stelle der Kammern (2, 3, 4) Einlässe (30, 31, 32) aufweist, deren freier Querschnitt wesentlich (ein Bruchteil) kleiner als der freie Querschnitt der übrigen Verbindungen (13 - 18) ist.

## Claims

1. Fuel supply system for motors of vehicles, in particular of model aircraft, consisting of a fuel tank, which is sealed off from the atmosphere and is connected via a fuel outlet line to the motor of the vehicle and via a gas line to an overpressure chamber (4) in an exhaust designed as silencer, the overpressure chamber (4) being connected on the inlet side to the combustion gas outlet of the motor and having on the outlet side a valve arrangement (16, 17, 18) controlling the pressure in the overpressure chamber (4) and an exhaust gas outlet (19) leading into the atmosphere, characterised in that the valve arrangement (16, 17, 18) consists of at least one valve (22, 23), the valve body (23) of which is mounted movably in a guide (26) running in longitudinal direction of the vehicle, so that the valve (22, 23) throttles the exhaust gas outlet (19) as a function of the inclination of the vehicle and/or the forces of inertia acting during acceleration and deceleration of the vehicle.

2. Fuel supply system according to Claim 2, characterised in that the valve arrangement consists of a plurality of identical valves (16, 17, 18).

3. Fuel supply system according to Claim 1 or 2, characterised in that, apart from the valve body (23), at least one further, movable body (24, 25) is held in the guide (26) of the valve body (23).

4. Fuel supply system according to one of Claims 1 to 3, characterised in that the guide (26) consists of a longitudinally slit pipe.

5. Fuel supply system according to one of Claims 1 to 4, characterised in that the guide (26) of the valve body (23) is arranged in a further chamber (3) in the exhaust, from which the exhaust gas outlet (19), leading into the atmosphere, emanates.

6. Fuel supply system according to one of Claims 1 to 5, characterised in that the exhaust has three chambers (2, 3, 4), arranged axially one behind the other, of which the two outer chambers (2, 4) are connected to each other via at least one pipeline (13, 14, 15), leading in a closed manner through the middle chamber (3), and the second chamber (4) in the flow direction of the exhaust gases is connected to the middle chamber (3) via the valve arrangement (16, 17, 18).

7. Fuel supply system according to one of Claims 1 to 6, characterised in that the chambers (2, 3, 4) are additionally connected to one another via a line (29), leading into the atmosphere, the line (29) having at the lowest point of the chambers (2, 3, 4) inlets (30, 31, 32), the free cross-section of which is substantially (a fraction) smaller than the free cross-section of the remaining connections (13 - 18).

## Revendications

1. Dispositif de distribution de combustible pour moteurs de véhicules, en particulier de maquettes d'avions, constitué d'un réservoir de combustible fermé par rapport à l'atmosphère, qui est relié au moteur du véhicule par l'intermédiaire d'une conduite de sortie de combustible et à une chambre de surpression (4) dans un échappement constitué sous forme de silencieux par l'intermédiaire d'une conduite de gaz, la chambre de surpression (4) étant reliée du côté entrée à la sortie de gaz de combustion du moteur et présentant du côté sortie un ensemble de soupapes (16, 17, 18) commandant la pression dans la chambre de surpression (4) et une sortie de gaz d'échappement (19) conduisant à l'atmosphère, caractérisé en ce que l'ensemble de soupapes (16, 17, 18) est constitué d'au moins une soupape (22, 23) dont le corps de soupape (23) est monté mobile dans une glissière (26) s'étendant en direction longitudinale du véhicule, de telle manière que la soupape (22, 23), en fonction de la position inclinée du véhicule et/ou des forces d'inertie actives lors de l'accélération et de la décélération du véhicule, étrangle la sortie d'échappement (19).

2. Dispositif de distribution de combustible selon la revendication 1, caractérisé en ce que l'ensemble de soupapes est constitué de plusieurs soupapes (16, 17, 18) semblables.

3. Dispositif de distribution de combustible selon l'une des revendications 1 et 2, caractérisé en ce qu'au moins un corps (24, 25) mobile supplémentaire est maintenu dans la glissière (26) du corps de soupape (23) en plus du corps de soupape (23).

4. Dispositif de distribution de combustible selon l'une des revendications 1 à 3, caractérisé en ce que la glissière (26) est constituée d'un tube fendu longitudinalement.

5. Dispositif de distribution de combustible selon l'une des revendications 1 à 4, caractérisé en ce que la glissière (26) du corps de soupape (23) est disposée dans une chambre supplémentaire (3) dans l'échappement de laquelle part la sortie de gaz d'échappement (19) menant à l'atmosphère.

6. Dispositif de distribution de combustible selon l'une des revendications 1 à 5, caractérisé en ce que l'échappement présente trois chambres (2, 3, 4) disposées les unes derrière les autres axialement, parmi lesquelles les deux chambres (2, 4) les plus extérieures sont reliées l'une à l'autre par au moins une conduite tubulaire (13, 14, 15) fermée conduisant à travers la chambre médiane (3) et la deuxième chambre (4) dans la direction d'écoulement des gaz d'échappement est reliée à la chambre médiane (3) par l'intermédiaire de l'ensemble de soupapes (16, 17, 18).

7. Dispositif de distribution de combustible selon l'une des revendications 1 à 6, caractérisé en ce que les chambres (2, 3, 4) sont additionnellement reliées entre elles par une conduite (29) menant à l'atmosphère, la conduite (29) présentant aux emplacements les plus bas des chambres (2, 3, 4) des entrées (30, 31, 32) dont la section transversale libre est sensiblement (une fraction) inférieure à la section libre des autres liaisons (13, 18).

Fig.1

Fig.2

Fig.3

EP 0 201 863 B1

Fig.4

Fig.5